# EUROPÄISCHE PATENTSCHRIFT

(11) **EP 1 706 295 B1**
(45) Veröffentlichungstag und Bekanntmachung des Hinweises auf die Patenterteilung: **02.01.2008**
(21) Anmeldenummer: 05814207.6
(22) Anmeldetag: 14.11.2005
(51) Int. Cl.: B60R 21/16

(54) **VERFAHREN ZUR HERSTELLUNG EINES GASSACKPAKETES FÜR EIN AIRBAGMODUL**
METHOD FOR THE PRODUCTION OF A GAS PACKET FOR AN AIRBAG MODULE
PROCEDE POUR PRODUIRE UN SAC GONFLABLE FORMANT PAQUET POUR UN MODULE COUSSIN GONFLABLE DE PROTECTION

(30) Priorität: 15.11.2004 DE 102004055657; 16.11.2004 DE 102004056128; 03.06.2005 DE 20509002 U; 03.06.2005 DE 20510863 U; 05.07.2005 DE 20510864 U
(43) Veröffentlichungstag der Anmeldung: 04.10.2006
(73) Patentinhaber: Takata-Petri AG, 63743 Aschaffenburg (DE)
(72) Erfinder: ECKERT, Nick, 12587 Berlin (DE); ISERMANN, Patrick, 14197 Berlin (DE)
(74) Vertreter: Baumgärtel, Gunnar
(86) Internationale Anmeldenummer: PCT/DE2005/002051
(87) Internationale Veröffentlichungsnummer: WO 2006/050720

(56) Entgegenhaltungen:
- EP-A- 1 314 618
- DE-A1- 10 020 677
- DE-A1- 10 114 208
- GB-A- 2 349 618
- GB-A- 2 371 025

## Beschreibung

Die Erfindung betrifft ein Verfahren zur Herstellung eines Gassackpaketes für ein Airbagmodul nach dem Oberbegriff des Patentanspruchs 1, eine Vorrichtung zur Durchführung dieses Verfahrens nach dem Oberbegriff des Patentanspruchs 28 sowie ein Gassackpaket für ein Airbagmodul nach dem Oberbegriff des Patentanspruchs 31.

Bei einem solchen Verfahren wird der Gassack in einer Faltvorrichtung, insbesondere einer Faltmaschine, zu einem Gassackpaket gefaltet und das gefaltete Gassackpaket in einer flexiblen Hülle, insbesondere in Form einer Folie, angeordnet und gasdicht verschlossen.

Bei einem aus der DE 101 14 208 A1 bekannten Verfahren dieser Art wird der Gassack nach dem Falten in einer Hülle verstaut und anschließend ein Unterdruck in dem Innenraum der Hülle erzeugt. Sodann wird die Hülle gasdicht verschlossen. Hierdurch wird das Packmaß des Gassackpaketes minimiert und der Gassack gleichzeitig vor Beeinträchtigung durch Feuchtigkeit und Staub geschützt. Hierbei besteht jedoch das Problem, dass bei oder nach der Entnahme des zu einem Gassackpaket gefalteten Gassackes aus der Faltmaschine, um das Gassackpaket in einer Hülle zu verstauen, die Gefahr einer Expansion oder Auflösung des Gassackpaketes besteht, die die weitere Handhabung erschwert.

Die vorliegende Erfindung befasst sich also insbesondere auch speziell mit Besonderheiten, die bei Aufnahme eines gefalteten Gassackpaketes in einer flexiblen Hülle (Folie) auftreten, die das mittels Unterdruck auf minimale Packmaße reduzierte Gassackpaket zur Erhaltung des Unterdruckes gasdicht umschließt, wobei vor allem die Notwendigkeit der Erzeugung und Aufrechterhaltung des Unterdruckes in dem von der Hülle gasdicht umschlossenen Gassackpaktes zu beachten ist.

Der Erfindung liegt daher das Problem zugrunde, ein Verfahren zur Herstellung eines gasdicht von einer Hülle umschlossenen Gassackpaketes für ein Airbagmodul der eingangs genannten Art weiter zu verbessern.

Dieses Problem wird erfindungsgemäß durch die Schaffung eines Verfahrens mit den Merkmalen des Patentanspruchs 1 gelöst.

Danach wird das Gassackpaket in der Faltmaschine, in der das Gassackpaket aus einem zu faltenden Gassack erzeugt wurde, von der Hülle zumindest teilweise, d.h. an mehreren Seiten, umschlossen. Um das gefaltete, von einer Hülle umgebene Gassackpaket an einem Modulgehäuse eines Airbagmoduls festlegen zu können, ohne die Hülle zu beschädigen, ist eine formschlüssige Befestigung des Gassackpaketes am Modulgehäuse mittels eines in dem Gassackpaket angeordneten Einlageteiles vorgesehen, das einen Formschlussbereich in Form eines Hinterschnittes bildet, der mit einem zugeordneten Formschlussbereich des Modulgehäuses in Eingriff bringbar ist.

Die erfindungsgemäße Lösung hat den Vorteil, dass mit einfachen Mitteln und mit großer Prozesssicherheit ein von einer flexiblen Hülle (gasdicht) umschlossenes Gassackpaket erzeugt werden kann, das bei minimalem Volumen flexibel gehandhabt und in ein kleinbauendes Airbagmodul für Kraftfahrzeuge integriert werden kann, indem zumindest ein Teil der zum gasdichten Einschließen des Gassackpaketes in einer flexiblen Hülle erforderlichen Arbeitschritte in der Faltvorrichtung selbst vorgenommen werden.

Bevorzugt erfolgt das gasdichte Einschließen des Gassackpaketes in der flexiblen Hülle während das Gassackpaket noch zumindest teilweise durch Faltelemente begrenzt wird, die beim Falten des Gassackes zu einem Gassackpaket auf diesen einwirkten. Hierbei kann es sich einerseits um mindestens ein aktives Faltelement handeln, das beim Falten des Gassackes mit einer Bewegung in Richtung auf das Innere des Gassackes auf den Gassack einwirkt, um diesen in ein gefaltetes Gassackpaket zu überführen, und/oder andererseits um mindestens ein passives Faltelement, das beim Falten des Gassackes sich entlang einer Seite des Gassackes erstreckt und die Ausdehnung des Gassackes senkrecht zu jener Erstreckungsebene begrenzt.

Hinsichtlich derjenigen (z.B. passiven) Faltelemente, die beim gasdichten Einschließen des Gassackpaketes in die flexible Hülle den Gassack nach wie vor begrenzen, um dessen nachträgliche Expansion entlang bestimmter Raumrichtungen zu verhindern, verläuft die flexible Hülle bereits beim Falten des Gassackes zu einem Gassackpaket zwischen dem jeweiligen Faltelement und dem zu faltenden Gassack, so dass das Faltelement bereits beim Falten des Gassackes über die flexible Hülle, d. h. unter Zwischenlage der flexiblen Hülle, auf den Gassack einwirkt.

In einer bevorzugten Ausgestaltung des erfindungsgemäßen Verfahrens dienen zum gasdichten Umschließen des Gassackpaketes mindestens zwei separate flexible Hüllenelemente, von denen bevorzugt das eine das Gassackpaket im Wesentlichen topfartig umschließt und das andere eine Deckfläche bildet.

Gemäß einer Variante dieser Ausführungsform wird das topfartige Hüllenelement beim Umschließen des Gassackpaketes gebildet, indem Schieber bzw. ein Formköper entlang des Randes des Gassackpaketes geführt werden, die das entsprechende Hüllenelement hierbei topfartig entlang der Außenseite des Gassackpaketes positionieren. Die Bewegung jener Schieber bzw. des Formkörpers kann z. B. in der Phase erfolgen, in der die zuvor beim Falten des Gassackpaketes auf die entsprechenden Bereiche der Außenseite des Gassackpaketes einwirkenden Faltelemente vom Gassackpaket weg bewegt werden.

Nach einer anderen Variante des erfindungsgemäßen Verfahrens ist das topfförmige Hüllenelement bereits vorgeformt, bevor das Gassackpaket, z. B. mittels eines Stempels, in das topfförmige Hüllenelement hineingedrückt wird. Hierzu ist das vorgeformte, topfartige Hüllenelement bereits während des Faltens, zumindest aber gegen Ende des Faltprozesses, an der Faltvorrichtung fixiert, so dass das Gassackpaket in das topfartige Hüllenelement eingebracht werden kann. Zu diesem Zweck, d.h., als Stempel wirkend, kann bevorzugt ein Faltelement verwendet werden, das zuvor beim Falten des Gassackes zu einem Gassackpaket wirksam war.

Die zum gasdichten Einschließen des gefalteten Gassackpaketes verwendete Hülle bzw. die hierfür verwendeten Hüllenelemente werden bevorzugt von einem (auf einer Rolle geführten) "Endlosband" mit Hüllenmaterial abgetrennt, und zwar unter Verwendung an der Faltvorrichtung vorgesehener Trennmittel, z. B. in Form einer Heizeinrichtung, mit der die Hülle an den Trennstellen angeschmolzen wird. In der Hülle können darüber hinaus Aufreißlinien vorgesehen sein, entlang derer die Hülle bei einem späteren crash-bedingten Entfalten des Gassackpaketes aufreißt.

Weiterhin ist vorgesehen, dass nach dem Einbringen des Gassackpaketes in die Hülle, d.h. nach dem Umschließen des Gassackpaketes mit der Hülle, und vor dem endgültigen gasdichten Verschließen der Hülle in dem von der Hülle umschlossenen Raum (durch Evakuierung) ein Unterdruck erzeugt wird. Hierdurch soll eine größtmögliche Reduzierung des Packvolumens erreicht werden.

Die hierfür vorgesehenen Evakuierungsmittel, z. B. in Form von Evakuierungsdüsen, sind vorteilhaft an der Faltvorrichtung angeordnet, in der der Gassack zunächst zu einem Gassackpaket gefaltet und anschließend in einer flexiblen Hülle untergebracht worden ist.

Ferner kann beim oder nach dem Falten des Gassackes eine Eindrückung in dem Gassackpaket erzeugt werden, mittels der das Gassackpaket formschlüssig an einem Gehäuse eines Airbagmodules anordenbar bzw. festlegbar ist, indem ein Vorsprung des Gehäuses in die Eindrückung des Gassackpaketes eingreift, wobei die Eindrückung an ein Einlageteil der vorstehend beschriebenen Art angrenzen kann, so dass diese gemeinsam zur formschlüssigen Befestigung des Gassackpaketes am Modulgehäuse beitragen.

Zur Bildung einer derartigen Eindrückung im Gassackpaket kann ein beim Falten des Gassackes in das Gassackpaket hinein bewegbares Element, insbesondere in Form eines Stempels, vorgesehen sein, welches bevorzugt unter Zwischenlage der flexiblen Hülle auf das Gassackpaket einwirkt, so dass die flexible Hülle im Bereich der Eindrückung des Gassackpaketes ebenfalls eingedrückt ist.

Auf die Bildung einer das Einlageteil bei der Herstellung einer formschlüssigen Verbindung mit einem Modulgehäuse ergänzenden Eindrückung des Gassackpaketes kann aber verzichtet werden, wenn die das Gassackpaket umschließende Hülle hinreichend stark evakuiert wird, so dass die hiermit verbundene Reduzierung der Größe des Gassackpaketes die Kontur des hierin angeordneten Einlageteiles für die Herstellung einer formschlüssigen Verbindung freilegt.

Eine Vorrichtung zur Durchführung des erfindungsgemäßen Verfahrens ist durch die Merkmale des Patentanspruchs 28 charakterisiert. Bevorzugte Ausführungsformen dieser Faltvorrichtung sind in den hiervon abhängigen Patentansprüchen angegeben.

Ein mit dem erfindungsgemäßen Verfahren besonders vorteilhaft herstellbares Gassackpaket ist durch die Merkmale des Patentanspruchs 31 sowie die hiervon abhängigen Patentansprüche charakterisiert.

Bei einem Gassackpaket für ein Airbagmodul eines Kraftfahrzeugs, das von einer Hülle gasdicht umschlossen wird, ist danach vorgesehen, dass die Hülle durch mindestens zwei separate Hüllenelemente gebildet wird, die gemeinsam das Gassackpaket gasdicht umschließen und die hierzu in geeigneter Form gasdicht miteinander verbunden (z.B. verschweißt oder verklebt) sind. Dabei ist in dem Gassackpaket ein Einlageteil angeordnet, das in einen Hinterschnitt eines Modulgehäuses eingreifen kann.

Die erfindungsgemäße Lösung ermöglicht in besonders einfacher und effektiver Weise, das Gassackpaket bereits in der Faltvorrichtung zum Falten des Gassackes von der Hülle zu umschließen, z.B. indem das topfartige Hüllenelement in der Faltvorrichtung durch topfartiges Umschließen des Gassackpaketes mit einem flexiblen Hüllenelement gebildet wird und anschließend das topfartige Hüllenelement zusammen mit dem darin angeordneten Gassackpaket durch ein weiteres Hüllenelement verschlossen wird.

Gemäß einer besonders vorteilhaften Erfindungsvariante, die auch unabhängig von der zweiteiligen Ausbildung der Hülle sowie von der gasdichten Ausbildung der Hülle anwendbar und ausführbar ist, sind in dem Gassackpaket und in der Hülle aneinander anliegende Bereiche mit jeweils einer Eindrückung oder einer Ausbuchtung versehen, über die das Gassackpaket zusammen mit der Hülle formschlüssig an einem Modulgehäuse festlegbar ist.

Die Eindrückung oder Ausbuchtung ist bevorzugt durch das Einlageteil gebildet und/oder grenzt an das Einlageteil.

Weitere Einzelheiten und Vorteile der Erfindung werden bei der nachfolgenden Beschreibung von Ausführungsbeispielen anhand der Figuren deutlich werden.

Es zeigen:
- Fig. 1: eine schematische Schnittansicht einer Faltvorrichtung für einen Gassack eines Airbagmodules nach dem Einlegen des Gassackes;
- Fig. 2: die Faltvorrichtung aus Figur 1 nach einem ersten Verfahrensschritt zum Falten des Gassackes;
- Fig. 3: die Faltvorrichtung aus Figur 1 nach einem zweiten Verfahrensschritt zum Falten des Gassackes;
- Fig. 4: die Faltvorrichtung aus Figur 1 nach dem Falten des Gassackes zu einem Gassackpaket;
- Fig. 5: die Faltvorrichtung aus Figur 1 beim Umschließen des Gassackes mit einer flexiblen Hülle;
- Fig.6: die Faltvorrichtung aus Figur 1 nach dem Umschließen des Gassackpaketes mit einer flexiblen Hülle;
- Fig. 7: ein gefaltetes Gassackpaket beim Einbau in ein Modulgehäuse;
- Fig. 8a: eine Abwandlung des Ausführungsbeispieles aus Figur 7 hinsichtlich der Ausgestaltung des Modulgehäuses;
- Fig. 8b: eine zweite Abwandlung des Ausführungsbeispieles aus Figur 7 hinsichtlich der Ausgestaltung des Modulgehäuses;
- Fig. 9a und 9b: eine dritte Abwandlung des Ausführungsbeispieles aus Figur 7 hinsichtlich der Ausgestaltung des Modulgehäuses.

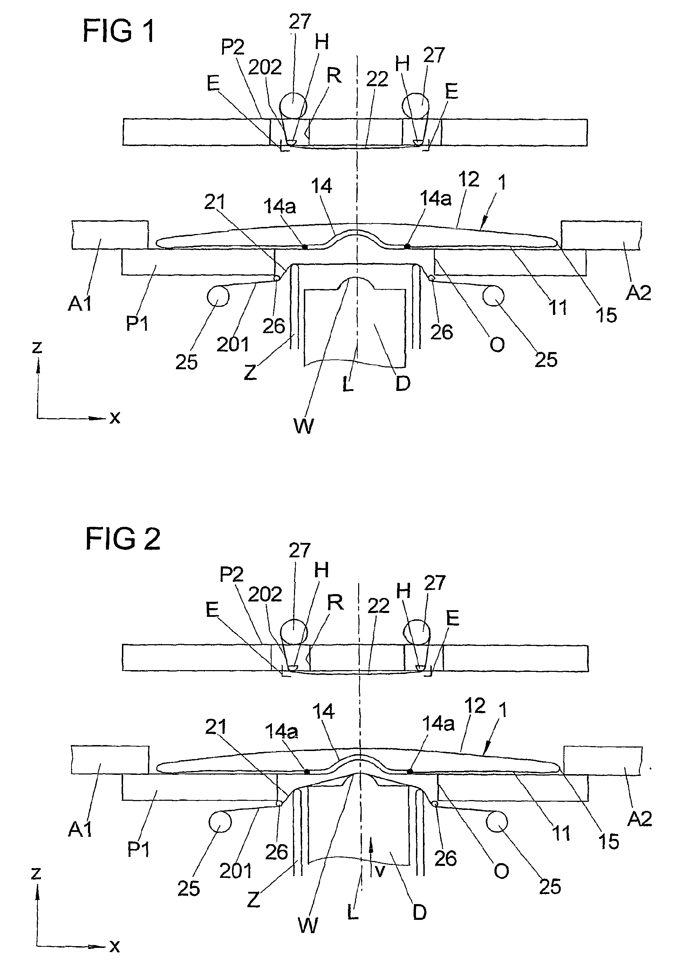

Figur 1 zeigt eine Faltvorrichtung in Form einer Faltmaschine zum Falten eines Gassackes 1, mit zwei passiven Platten P1 und P2 in Form einer Unterplatte bzw. einer Oberplatte, mit denen der auf der Unterplatte P1 ausgestreckt liegende, leere Gassack 1 beim Falten hinsichtlich seiner Ausdehnung in vertikaler Richtung (entlang einer vertikalen Achse z) begrenzt wird. Dabei liegt der auf der Unterplatte P1 ausgebreitete Gassack 1 in dem in Figur 1 dargestellten Zustand vor dem Beginn eines Faltvorganges mit seiner Unterseite 11 auf der Unterplatte P1 auf, während die gegenüberliegende Oberseite 12 des Gassackes 1 von der zugeordneten Oberplatte P2 entlang der vertikalen Achse z noch deutlich beabstandet ist.

Ferner weist die Faltvorrichtung zwei aktive, entlang einer horizontalen Achse x auf das Innere I des zu faltenden Gassackes 1 hin gegeneinander verschiebbare Faltelemente A1, A2 in Form von Schiebern auf, die dem äußeren Rand 15 des Gassackes 1 zugewandt sind und mittels derer der zu faltende Gassack 1 in bekannter weise auf ein Zentrum hin zusammengerafft werden kann. Weitere in Figur 1 nicht dargestellte Faltelemente können zur Begrenzung des Gassackes 1 bzw. zur Einwirkung auf den Gassack 1 entlang einer senkrecht zur Bildebene, also senkrecht zur horizontalen Achse x und senkrecht zur vertikalen Achse z, verlaufenden Achse vorgesehen sein.

Die Unterplatte P1 der Faltvorrichtung weist eine zentrale Öffnung O auf, konzentrisch zu der ein Stempel D mit einer dem Gassack 1, genauer dessen Unterseite 11, zugewandten Auswölbung W sowie ein als Schieber ausgebildeter, den Stempel D umgreifender, zylindrischer Formkörper Z angeordnet sind. Sowohl der Stempel D als auch der hohlzylindrische Formkörper Z sind entlang der vertikalen Richtung z von dem Gassack 1, nämlich dessen Unterseite 11, beabstandet.

Die Bezeichnungen horizontale Achse x und vertikale Achse z sind dabei vorliegend so gewählt, dass die Anordnung dieser beiden Achsen entlang verschiedener Raumrichtungen, insbesondere zueinander senkrechter Raumrichtungen, deutlich wird. Für die Anwendung des erfindungsgemäßen Verfahrens kommt es nicht darauf an, dass die hier als horizontale Achse bezeichnete x-Achse tatsächlich auch horizontal, also parallel zur Erdoberfläche verläuft. Das gleiche gilt für die als vertikale Achse bezeichnete z-Achse.

Zwischen dem Stempel D und dem zylindrischen Formkörper Z einerseits und dem Gassack 1, genauer dessen Unterseite 11, andererseits erstreckt sich im Bereich der Öffnung O der Unterplatte P1 ein als Folienabschnitt 21 ausgebildetes flexibles Hüllenelement, das einen Abschnitt eines über mehrere Rollen 25, 26 geführten ("endlosen") dehnbaren Folienmaterials 201 bildet.

In der entlang der vertikalen Achse z oberhalb der Unterplatte P1 angeordneten Oberplatte P2 der Faltvorrichtung ist eine Ringöffnung R vorgesehen, die konzentrisch zu der Öffnung O in der Unterplatte P1 angeordnet ist. Durch diese Ringöffnung R ist ein weiteres flexibles Hüllenelement in Form eines Folienabschnittes 22 geführt, der sich zwischen der Oberplatte P2 und dem Gassack 1, genauer dessen Oberseite 12, erstreckt und dabei von dem Gassack 1 entlang der vertikalen Achse z beabstandet ist. Auch dieser Folienabschnitt 22 bildet einen Abschnitt eines über Rollen 27 geführten ("endlosen") dehnbaren Folienmaterials 202.

Im Bereich der Ringöffnung R der Oberplatte P1 sind ferner (elektrische) Heizelemente H sowie Evakuierungsmittel E in Form von Evakuierungsdüsen ringförmig angeordnet, deren Funktion bei der nachfolgenden Beschreibung der Arbeitsweise der in Figur 1 dargestellten Faltvorrichtung anhand der Figuren 2 bis 6 deutlich werden wird.

Im Inneren des in der Faltvorrichtung zu faltenden Gassackes 1 ist ein zwischen zwei seitlichen Enden gewölbt verlaufendes Einlageteil 14, z.B. in Form eines Rahmenteiles, angeordnet, das sich oberhalb der Durchgangsöffnung O der Unterplatte P1 der Faltvorrichtung entlang der Unterseite 11 des Gassackes 1 zwischen zwei seitlichen Endabschnitten 14a, 14a erstreckt und einen entsprechend der Auswölbung W des Stempels D gewölbten Querschnitt aufweist und das mit dem angrenzenden Bereich der Unterseite 11 des Gassackes 1 verbunden ist.

Zum Falten des Gassackes 1 mit der anhand Figur 1 beschriebenen Faltvorrichtung wird zunächst der Stempel D in vertikaler Richtung v parallel zur vertikalen Achse z in Richtung auf den Gassack 1, nämlich dessen Unterseite 11 verschoben, wobei der oberhalb des Stempels D verlaufende Folienabschnitt 21 mitgenommen wird und mittels der Auswölbung W des Stempels D in den durch am Rahmenteil 14 anliegenden Abschnitt der Unterseite 11 des Gassackes 1 hineingeführt wird.

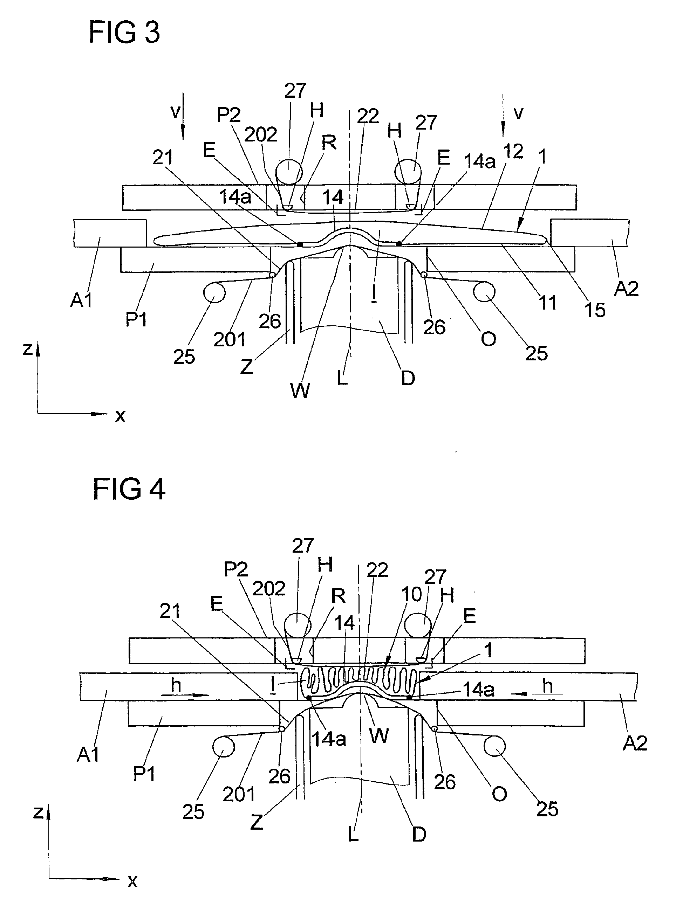

Im nächsten Schritt wird gemäß den Figuren 2 und 3 die Oberplatte P2 der Faltvorrichtung in Richtung auf den Gassack 1, nämlich dessen Oberseite 12, bewegt, so dass sie zusammen mit der Unterplatte 11 den für das beim Falten des Gassackes 1 entstehende Gassackpaket zur Verfügung stehenden Faltraum entlang der vertikalen Achse z, also im Ausführungsbeispiel nach unten und oben, begrenzt.

Anschließend werden gemäß Figur 3 und 4 die als Schieber ausgebildeten aktiven Faltelemente A1, A2 in horizontaler Richtung h parallel zur horizontalen Achse x hin zu dem äußeren Rand 15 des Gassackes 1 aufeinander zu bewegt, wobei der zwischen den Faltelementen A1, A2 angeordnete Gassack auf ein Zentrum hin zusammengerafft wird. Entsprechende Schieber können für das Falten bzw. Zusammenraffen des Gassackes entlang der senkrecht zur vertikalen Achse z und zur horizontalen Achse x verlaufenden Richtung (senkrecht zur Blattebene) verwendet werden, wie z. B. aus der DE 195 35 564 C2 bekannt. Hierdurch entsteht gemäß Figur 4 ein durch Raffen gefaltetes Gassackpaket 10, welches in dem durch die passiven Faltelemente (Unterplatte P1 und Oberplatte P2) sowie durch die aktiven Faltelemente A1, A2 begrenzten Faltraum angeordnet ist.

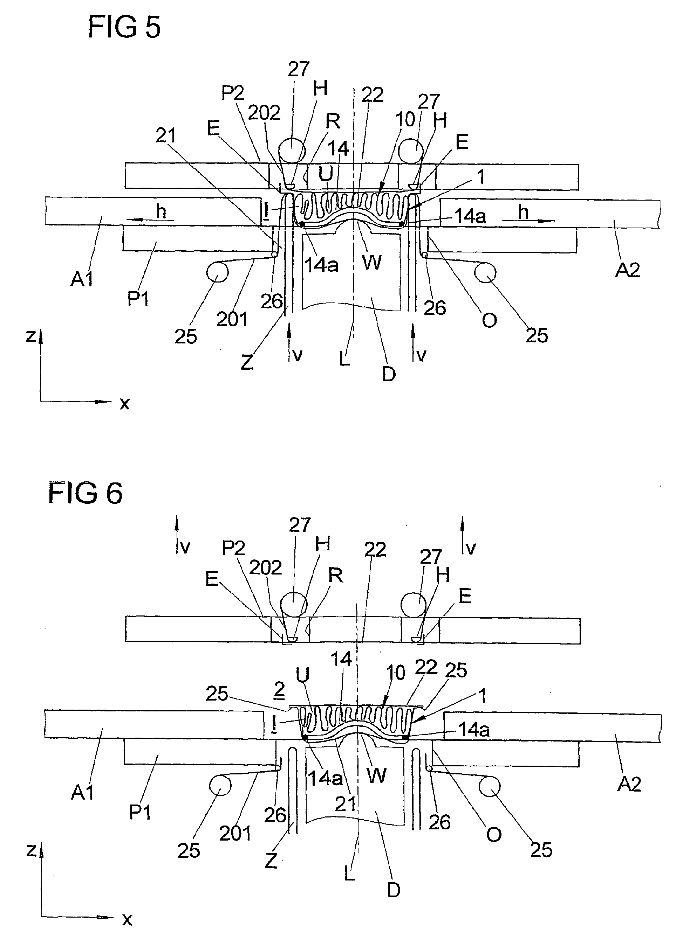

Dieses für die platzsparende Verwendung in einem Airbagmodul auf möglichst kleinen Raum zusammengefaltete Gassackpaket 10 wird nun gemäß Figur 5 in eine durch die beiden Folienabschnitte 21, 22 gebildete Hülle eingebracht und in dieser gasdicht verschlossen.

Zunächst wird hierzu gemäß Figur 5 der zylindrische Formkörper Z durch die Öffnung O in der Unterplatte P1 hindurch in vertikaler Richtung zu der Oberplatte P2 hin bewegt, während die aktiven Faltelemente A1, A2 in horizontaler Richtung h von dem Gassackpaket 10 wegbewegt werden. Hierbei wird der den hohlzylindrischen Rahmen Z übergreifende Folienabschnitt 21 mitgenommen, so dass er eine topfförmige Aufnahme für das Gassackpaket 10 bildet und dieses topfartig umgibt. Der entsprechende Folienabschnitt 21 wird dabei mittels des hohlzylindrischen Formkörpers Z soweit angehoben, dass der entstehende topfartige Folienabschnitt 21 mit seinem oberen Rand bis zu den an der Oberplatte P2 vorgesehenen Evakuierungsmitteln E und Heizelementen H reicht.

In diesem Zustand der Faltvorrichtung bildet der vor der Oberplatte P2 angeordnete Folienabschnitt 22 eine Deckfläche, die die offene Seite des topfförmigen Folienabschnittes 21 verschließt. Beide Folienabschnitte 21, 22 zusammen bilden somit eine flexible Hülle, die den zu einem Gassackpaket 10 gefalteten Gassack 1 vollständig umgibt.

Dabei ragen in dem Bereich, in dem die beiden Folienabschnitte 21, 22 aneinander anliegen, die abgewinkelten Evakuierungsmittel E in den von den Folienabschnitten 21, 22 umschlossenen Raum U hinein, so dass in diesem durch Evakuierung von Luft ein Unterdruck erzeugt werden kann. Hierdurch wird das Packvolumen des Gassackpaketes 10 nochmals reduziert, und es wird das Gassackpaket 10 in dem Zustand mit minimalem Packvolumen konserviert, indem die das Gassackpaket 10 nach allen Seiten hin umschließenden Folienabschnitte 21, 22 gasdicht verschlossen werden. Hierzu werden nach der Erzeugung des Unterdrucks in dem von der Hülle 2 umschlossenen Raum U die beiden Folienabschnitte 21, 22 in ihrem Anlagebereich durch Anschmelzen des Folienmaterials mittels der hierfür vorgesehenen Heizelemente H dichtend miteinander verbunden. Dabei werden die beiden Folienabschnitte 21, 22 gleichzeitig von dem jeweiligen um die zugeordneten Rollen 25, 26 bzw. 27 geführten Folienmaterial abgetrennt.

Im Ergebnis erfolgen das Einbringen des Gassackpaketes 10 in die durch die beiden Folienabschnitte 21, 22 gebildete Hülle, die Erzeugung eines Unterdruckes in der Hülle 2 sowie das gasdichte Verschließen der Hülle 2 durch Verschweißen der Folienabschnitte 21, 22 in der Faltmaschine, in der das Gassackpaket 10 zuvor durch Falten eines Gassackes 1 erzeugt worden war. Hierbei begrenzen die Oberplatte P2 und der gegenüberliegende Stempel D nach wie vor das Gassackpaket 10 und sichern es gegen eine Ausdehnung entlang einer (vertikalen) Raumrichtung z. Entlang der hierzu senkrechten Raumrichtung x wurden demgegenüber die beiden aktiven Faltelemente A1, A2 von dem Gassackpaket 10 wegbewegt, damit der zur Bildung des topfartigen Folienabschnittes dienende hohlzylindrische Formkörper Z entlang des Randes des Gassackpaketes 10 verschoben werden kann.

Bevorzugt sind bei einer mehrlagig ausgebildeten Folie in einem der Folienabschnitte 21, 22, insbesondere dem eine Deckfläche der Hülle 2 bildenden Folienabschnitte 22, Sollreißstellen in Form einer Perforation vorgesehen, entlang derer die Hülle 2 aufreißen kann, wenn der Gassack zu einem späteren Zeitpunkt, als Bestandteil eines Airbagmodules, crash-bedingt aufgeblasen wird und sich dabei entfaltet. Hierbei muss die die Form des umhüllten Gassackpaketes gewährleistende, zu Bildung definierter Schwachstellen perforierte Folienlage von einer weiteren (vergleichsweise dünneren) Folienlage überdeckt sein, die den gasdicht Abschluss trotz Perforation gewährleistet.

Gemäß Figur 6 wird die Oberplatte P2 der Faltvorrichtung erst nach Fertigstellung der gasdichten Hülle 2 für das Gassackpaket 10 in vertikaler Richtung v entlang der vertikalen Achse z von dem Gassackpaket 10 entfernt, so dass dieses in vertikaler Richtung nicht mehr begrenzt ist und aus der Faltmaschine entnommen werden kann. Es besteht dann keine Gefahr mehr, dass bei der Entnahme des Gassackpaketes 10 aus der Faltvorrichtung, dem Transport des Gaspaketes 10 zu einem weiteren Montageplatz oder dem Einbau des Gassackpaketes 10 in ein Airbagmodul, insbesondere ein hierfür vorgesehenes Modulgehäuse, das Gassackpaket 10 unbeabsichtigt expandieren könnte.

In einer Abwandlung des anhand der Figuren 1 bis 6 dargestellten Ausführungsbeispieles kann das topfartige Hüllenelement, welches schließlich das Gassackpaket 10 zur Bildung einer Hülle 2 umgibt, aus einem hinreichend formstabilen Material bestehen, so dass es, z. B. durch Tiefziehen, mittels eines warmen Stempels, topfförmig vorgeformt werden kann. Dieses topfförmige Hüllenelement würde dann bei einer Faltvorrichtung der in den Figuren 1 bis 6 dargestellten Art anstelle des hohlzylindrischen Rahmens Z konzentrisch zu der Durchgangsöffnung O, der Unterplatte P1 angeordnet, damit das fertig gefaltete Gassackpaket 10 mittels eines Stempels aus dem von den Faltelementen umschlossenen Faltraum in diese topfförmige Aufnahme hineingedrückt werden kann. Anschließend wird dann die noch offene Deckfläche der topfförmigen Aufnahme wiederum mit einem weiteren Hüllenelement, z. B. in Form eines Folienabschnittes, verschlossen. Dies erfolgt bevorzugt unmittelbar in der Faltvorrichtung selbst. Es kann jedoch auch vorgesehen sein, dass die vorgeformte topfförmige Aufnahme zusammen mit dem darin verstauten Gassackpaket unter Zwang zu einer weiteren Station transportiert wird, wo die noch offene Deckfläche verschlossen, anschließend ein Unterdruck erzeugt sowie sodann die topfförmige Aufnahme und die Deckfläche z. B. durch Schweißen, gasdicht miteinander verbunden werden.

Insgesamt ermöglicht das beschriebene Verfahren mit einfachen und prozesssicheren Verfahrensschritten eine erhebliche Reduktion des Packvolumens eines Gassackpaketes und dessen gleichzeitigen Schutz vor Umwelteinflüssen, wobei das in der Hülle 2 gasdicht verpackte Gassackpaket 10 bei der weiteren Montage eines Airbagmodules problemlos automatisiert gehandhabt werden kann, da keine Gefahr einer ungewollten Expansion des Gassackpaketes besteht. Hierbei ist allerdings zu beachten, dass aufgrund der gasdichten Umhüllung des Gassackpaketes 10 die übliche Befestigung des Gassackes am Airbagmodul, z. B. am Modulgehäuse oder einem Generatorträger, durch Schrauben, Bolzen oder vergleichbare Befestigungselemente, die den Gassack durchdringen, zu einer Beschädigung der gasdichten Hülle führen würde.

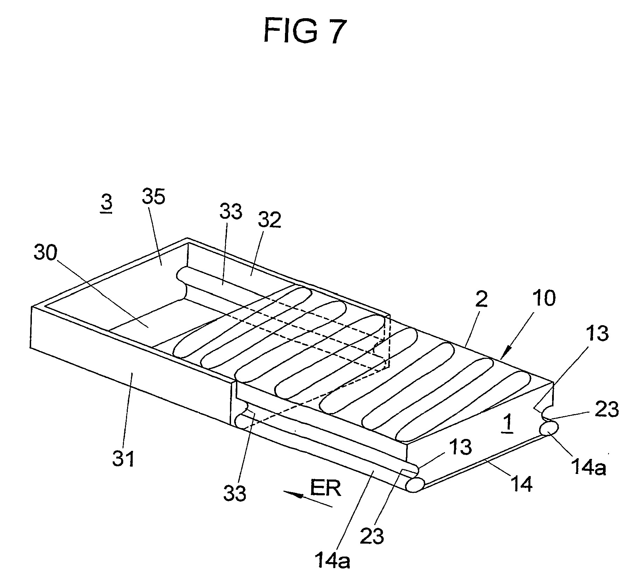

Das in einer Hülle 2 gasdicht verpackte Gassackpaket 10 der in Figur 6 dargestellten Art wird daher, wie nachfolgend anhand der Figuren 7 bis 9b beschrieben, bevorzugt formschlüssig an einem Airbagmodul, insbesondere einem Modulgehäuse, festgelegt, unter Ausnutzung am Gassackpaket 10 und am Modulgehäuse ausgebildeter Formschlussbereiche, wie z. B. der Endabschnitte 14a, 14a eines im Inneren I des Gassackes 1 als Einlageteil angeordneten Rahmens 14, der zumindest bereichsweise mit einer Oberfläche des Gassackes 1 verbunden ist, sowie benachbart hierzu vorgesehener Eindrückungen 13, 23 des Gassackpaketes 10 und der Hülle 2, die durch den Rahmen 14 stabilisiert werden.

In einem in Figur 7 dargestellten ersten Ausführungsbeispiel ist ein Modulgehäuse 3 mit einer (zum Anschluss eines Gasgenerators) zumindest teilweise offenen Bodenfläche 30, zwei Seitenwänden 31, 32 und einer Rückwand 35 so ausgebildet, dass ein gefaltetes Gassackpaket 10 zusammen mit der dieses umschließenden Hülle 2 durch eine der Rückwand 35 gegenüberliegende offene Seite des Modulgehäuses 3 in dieses eingeschoben werden kann. In den Seitenwänden 31, 32 des Modulgehäuses 3 erstrecken sich jeweils in Einschieberichtung ER des Gassackpaketes 1 verlaufende Formschlussbereiche 33 in Form von Auswölbungen, die in zugeordnete, am Gassackpaket 10 und der Hülle 2 ausgebildete und durch einen zwischen zwei Endabschnitten 14a erstreckten, eingenähten Rahmen 14 stabilisierte Eindrückungen 13, 23 eingreifen und von den Endabschnitten 14a des Rahmens 14 formschlüssig hintergriffen werden.

Es sind also am Modulgehäuse 3 einerseits und am Gassackpaket 10 und der zugeordneten Hülle 2 andererseits Formschlussbereiche mit Hinterschnitten ausgebildet, die ein Einschieben des Gassackpaketes 10 mit der Hülle 2 in das Modulgehäuse 3 erlauben, so dass das Gassackpaket 10 zusammen mit der Hülle 2 formschlüssig im Modulgehäuse 3 gehalten wird. Die der Rückwand 35 des Modulgehäuses 3 gegenüberliegende, zum Einschieben des Gassackpaketes 10 offene Seite des Modulgehäuses 3 kann anschließend verschlossen werden.

Figur 8a zeigt eine erste Abwandlung des Ausführungsbeispieles aus Figur 7 hinsichtlich der Ausbildung des Modulgehäuses 4, das vorliegend zwei im Querschnitt winkelförmige Gehäuseteile 41, 42 umfasst, die zur Aufnahme des Gassackpaketes 10 entlang einer Aufnahmerichtung AR aufeinander zu bewegt werden. Hierbei greifen an jedem der beiden Gehäuseteile 41, 42 vorgesehene Formschlussbereiche 43 in Form von Auswölbungen in die entsprechenden Formschlussbereiche 13 des Gassackpaketes 1, gebildet durch Vertiefungen, ein.

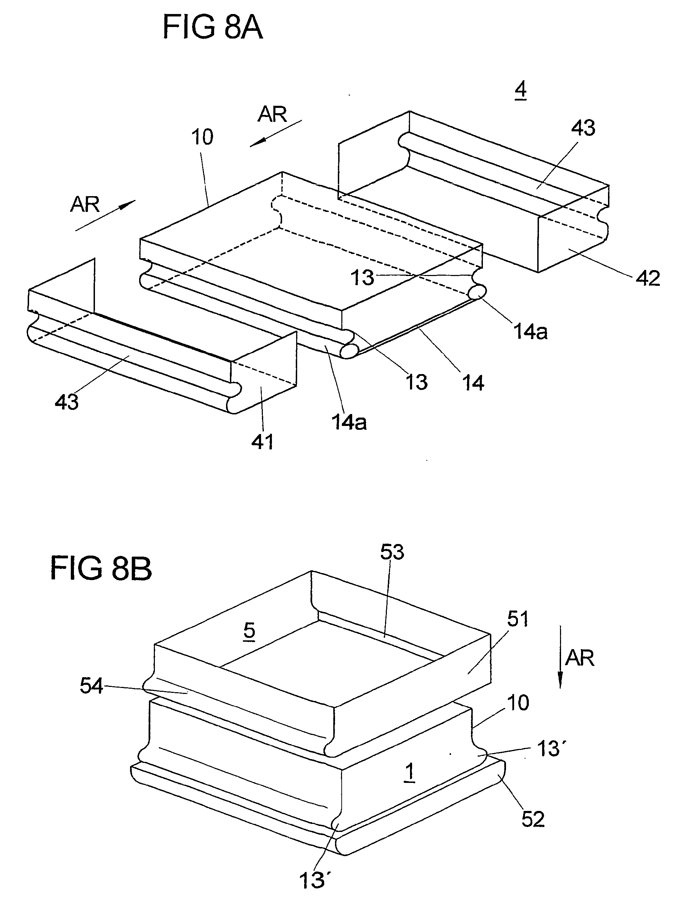

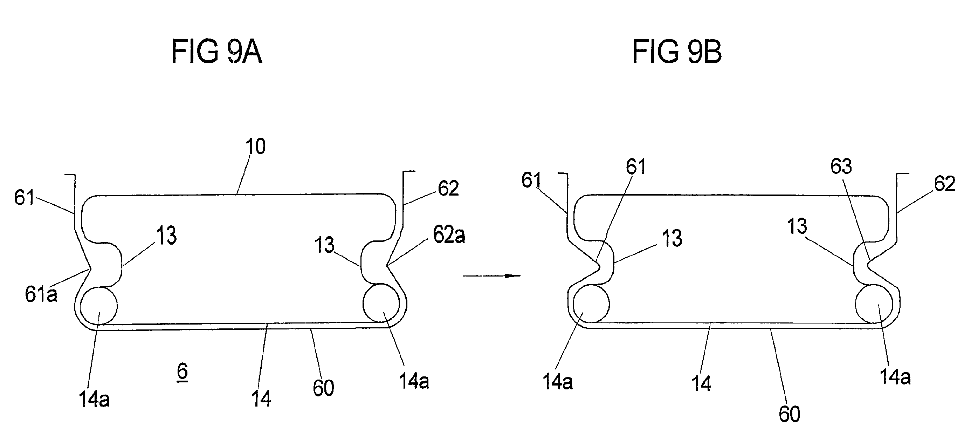

In Figur 8a ist dabei, ebenso wie in den nachfolgenden Figuren 8b sowie 9a und 9b, die das Gassackpaket 10 umschließende Hülle 2 der Einfachheit halber weggelassen, da das jeweils verwendete Gehäuseprinzip unabhängig davon ist, ob der aufzunehmende Gassack von einer Hülle umschlossen wird oder nicht. Selbstverständlich sind die in den Figuren 8a, 8b sowie 9a und 9b dargestellten Ausführungsbeispiele eines Modulgehäuses 4, 5 bzw. 6 jeweils bestens geeignet, das in Figur 7 dargestellt, von einer Hülle 2 umgebene Gassackpaket 10 aufzunehmen. So können insbesondere die in den Figuren 8a, 8b sowie 9a und 9b dargestellten Gassackpakete 10 auch jeweils als von einer Hülle 2 umschlossen gedacht werden. Das in Figur 8a dargestellte Gassackpaket 10 wäre dann identisch mit dem in Figur 7 dargestellten, von einer Hülle 2 umschlossenen Gassackpaket 10.

Figur 8b zeigt eine Abwandlung des Ausführungsbeispieles aus Figur 8a hinsichtlich der Ausbildung sowohl des Gassackpaketes 10 als auch des Modulgehäuses 5. Gemäß Figur 8b weist das Gassackpaket 10 als Formschlussbereiche 13' nach außen abstehende Auswölbungen, gebildet durch eine Einlageteil in Form eines Rahmens auf, und das Modulgehäuse dementsprechend in einem das Gassackpaket 10 umschließenden Gehäuseteil 51 Einbuchtungen 53, die mit den Auswölbungen 13' in Eingriff bringbar sind. Hierbei wird das das Gassackpaket 10 umschließende Gehäuseteil 51 auf seiner zum Einführen des Gassackpaketes 10 offenen Seite von einem als flache Abdeckung ausgebildeten weiteren Gehäuseteil 52 verschlossen, welches eine Durchtrittsöffnung für die Gase eines Gasgenerators aufweist. Auf die Bildung zusätzlicher Eindrückungen am Gassackpaket 10 wurde hier verzichtet.

Gemeinsames Merkmal der in den Figuren 8a und 8b dargestellten Ausführungsformen ist, dass die Gehäuseteile 41, 42 bzw. 51, 52 des jeweiligen Modulgehäuses 4 bzw. 5 zur Aufnahme des jeweiligen Gassackpaketes 10 entlang einer Richtung AR senkrecht zur Erstreckungsrichtung der Formschlussbereiche 13, 13', 43, 53 aufeinander zu bewegt werden, während bei dem im Figur 7 dargestellten Ausführungsbeispiel das Gassackpaket 10 in Erstreckungsrichtung ER der einander zugeordneten Formschlussbereiche 13, 33 in das Modulgehäuse 3 eingeschoben wird.

In dem in Figur 9a dargestellten Ausführungsbeispiel ist ein Gassackpaket 10, das in gegenüberliegenden seitlichen Endabschnitten mit Formschlussbereichen 13 in Form von Eindrückungen versehen ist und einen im Querschnitt zwischen zwei Endabschnitten 14a erstreckten Rahmen 14 zur Stabilisierung der Formschlussbereiche 13 in Form von Einbuchtungen aufweist, in einem eine Bodenfläche 60 und gegenüberliegende Seitenwände 61, 62 aufweisenden Modulgehäuse 6 angeordnet. Dessen Seitenwänden 61, 62 sind jeweils mit Sollverformungsstellen 61a bzw. 62a zur Bildung eines in die Formschlussbereiche 13 des Gassackpaketes 10 eingreifenden gehäuseseitigen Formschlussbereiches versehen.

Durch nach innen gerichtete, auf die Sollverformungsstellen 61a, 62a wirkende Kräfte bzw. Druck werden an diesen Stellen Formschlussbereiche 63 in Form von Auswölbungen gebildet, die formschlüssig in die zugeordneten Eindrückungen bzw. Einbuchtungen 13 des Gassackpaketes 10 eingreifen und hierdurch die gewünschte formschlüssige Verbindung herstellen. Dabei wird insbesondere der im Gassackpaket 10 vorgesehene Rahmen 14 mit seinen seitlichen Endabschnitten 14a formschlüssig im Gehäuse 6 gehalten, indem er die dort vorgesehenen Ausbuchtungen bzw. Auswölbungen 63 hintergreift bzw. in die durch diese Formschlussbereiche gebildeten Hinterschnitte eingreift. Bei einer hinreichen nachgiebigen Ausbildung des Gassackpaketes 10 können des Einbuchtungen 13 alternativ auch erst bei Formung der Formschlussbereiche 63 in Form von Auswölbungen am Modulgehäuse 6 erzeugt werden.

Durch diese Art der Festlegung eines Gassackpaketes 10 an einem Modulgehäuse 3, 4, 5 oder 6 wird nicht nur eine Beschädigung einer das Gassackpaket 10 umgebenden, gasdichten Hülle 2 verhindert, sondern es wird auch das Montageverfahren erleichtert. Insbesondere entfällt die Betätigung zusätzlicher Befestigungsmittel in Form von Schrauben, Bolzen oder dergleichen. Das im Gassackpaket 10 vorgesehene Einsatzteil in Form eines Rahmens 14 kann dabei gleichzeitig einen Diffusor bilden und somit eine Doppelfunktion übernehmen, nämlich zusätzlich zu der Funktion der Festlegung des Gassackpaketes 10 am Gehäuse die Funktion einer definierten Verteilung des Gasstromes im Gassack.

## Patentansprüche

1. Verfahren zur Herstellung eines Gassackpaketes für ein Airbagmodul, bei dem
a) der Gassack (1) in einer Faltvorrichtung zu einem Gassackpaket (10) zusammengefaltet wird und
b) das Gassackpaket (10) von einer flexiblen Hülle(2) gasdicht umschlossen wird,
**dadurch gekennzeichnet,**
**dass** das Gassackpaket (10) bereits in der Faltvorrichtung zumindest teilweise von der Hülle (2) umschlossen wird, wobei in dem Gassack (1) mindestens ein Einlageteil (14) angeordnet ist, mit dem das Gassackpaket (10) in einen Hinterschnitt in einem Modulgehäuse (3, 4, 5, 6) eingreifen kann.

2. Verfahren nach Anspruch 1, **dadurch gekennzeichnet, dass** das Gassackpaket (10) in der Faltvorrichtung durch die Hülle (2) zumindest an mehreren Seiten topfartig umschlossen wird.

3. Verfahren nach Anspruch 1 oder 2, **dadurch gekennzeichnet, dass** das Gassackpaket (10) in der Faltvorrichtung von der Hülle (2) vollständig umschlossen wird.

4. Verfahren nach einem der vorhergehenden Ansprüche, **dadurch gekennzeichnet, dass** das Gassackpaket (10) in der Faltvorrichtung zumindest teilweise von der Hülle (2) umschlossen wird, während das Gassackpaket (10) noch an zumindest einer Seite durch Faltelemente (P1, P2) begrenzt wird, die zur Faltung des Gassackpaketes (10) verwendet wurden.

5. Verfahren nach Anspruch 4, **dadurch gekennzeichnet, dass** das Gassackpaket (10) bei Bildung der Hülle (2) in der Faltvorrichtung noch durch zumindest ein aktives Faltelement (A1, A2) begrenzt ist, das beim Falten des Gassackpaketes (10) auf dessen Zentrum hin auf den Gassack (1) einwirkt.

6. Verfahren nach Anspruch 4 oder 5, **dadurch gekennzeichnet, dass** das Gassackpaket (10) während der Bildung der Hülle (2) noch durch mindestens ein passives Faltelement (P1, P2) begrenzt wird, das beim Falten des Gassackpaketes (10) zur Begrenzung des Faltraumes verwendet wurde.

7. Verfahren nach einem der vorhergehenden Ansprüche, **dadurch gekennzeichnet, dass** die Hülle (2) durch mindestens zwei separate Hüllenelemente (21, 22) gebildet wird.

8. Verfahren nach Anspruch 7, **dadurch gekennzeichnet, dass** das eine Hüllenelement (21) topfartig ausgebildet ist und das andere Hüllenelement (22) das topfartige Hüllenelement (21) verschließt.

9. Verfahren nach Anspruch 8, **dadurch gekennzeichnet, dass** das topfartige Hüllenelement (21) beim Umschließen des Gassackpaketes (10) mit der Hülle (2) gebildet wird.

10. Verfahren nach Anspruch 8 oder 9, **dadurch gekennzeichnet, dass** das topfartige Hüllenelement (21) durch mindestens einen Formkörper (Z) gebildet wird, der das Hüllenelement (21) entlang des Randes des Gassackpaketes (10) führt.

11. Verfahren nach Anspruch 10, **dadurch gekennzeichnet, dass** der Formkörper (Z) entlang des Randes des Gassackpaketes (10) geführt wird, während mindestens ein Faltelement (A1, A2) der Faltvorrichtung von dem Rand des Gassackpaketes (10) weg bewegt wird.

12. Verfahren nach Anspruch 8, **dadurch gekennzeichnet, dass** das topfartige Hüllenelement (21) vor dem Einbringen des Gassackpaketes (10) vorgeformt wird.

13. Verfahren nach Anspruch 12, **dadurch gekennzeichnet, dass** das Gassackpaket (10) durch mindestens einen Stempel der Faltvorrichtung in das vorgeformte topfartige Hüllenelement (21) hineingedrückt wird.

14. Verfahren nach Anspruch 12 oder 13, **dadurch gekennzeichnet, dass** das vorgeformte topfartige Hüllenelement (21) derart an der Faltvorrichtung festgelegt wird, dass das gefaltete Gassackpaket (10) in das Hüllenelement (21) hineingedrückt werden kann.

15. Verfahren nach einem der vorhergehenden Ansprüche, **dadurch gekennzeichnet, dass** die zum Umschließen des Gassackpaketes (10) verwendete Hülle (2) von einem Endlosband (201, 202) abgetrennt wird.

16. Verfahren nach Anspruch 15, **dadurch gekennzeichnet, dass** die Hülle (2) unter Verwendung an der Faltvorrichtung vorgesehener Trennmittel (H) abgetrennt wird.

17. Verfahren nach Anspruch 16, **dadurch gekennzeichnet, dass** als Trennmittel (H) Heizelemente verwendet werden.

18. Verfahren nach einem der vorhergehenden Ansprüche, **dadurch gekennzeichnet, dass** zur Bildung der Hülle (2) eine mehrlagige Folie verwendet wird.

19. Verfahren nach einem der vorhergehenden Ansprüche, **dadurch gekennzeichnet, dass** in dem von der Hülle (2) umschlossenen Raum (U) vor dem gasdichten Verschließen der Hülle (2) ein Unterdruck erzeugt wird.

20. Verfahren nach Anspruch 19, **dadurch gekennzeichnet, dass** der Unterdruck durch an der Faltvorrichtung vorgesehene Evakuierungsmittel (E) erzeugt wird.

21. Verfahren nach Anspruch 19 oder 20, **dadurch gekennzeichnet, dass** nach der Erzeugung eines Unterdruckes in dem von der Hülle (2) umschlossenen Raum (U) die Hülle (2) gasdicht verschlossen wird.

22. Verfahren nach Anspruch 7 und 21, **dadurch gekennzeichnet, dass** die Hülle (2) durch Verbinden der beiden Hüllenelemente (21, 22) verschlossen wird.

23. Verfahren nach Anspruch 22, **dadurch gekennzeichnet, dass** die beiden Hüllenelemente (21, 22) durch Anschmelzen miteinander verbunden werden.

24. Verfahren nach Anspruch 22 oder 23, **dadurch gekennzeichnet, dass** die beiden Hüllenelemente (21, 22) durch an der Faltvorrichtung vorgesehene Verbindungsmittel (H) miteinander verbunden werden.

25. Verfahren nach einem der vorhergehenden Ansprüche, **dadurch gekennzeichnet, dass** bei Bildung des Gassackpaketes (10) mindestens eine Eindrückung (13) und/oder Ausbuchtung (13') in dem Gassackpaket (10) erzeugt wird, mittels der das Gassackpaket (10) formschlüssig an einem Modulgehäuse (3, 4, 5, 6) anordenbar ist, indem ein am Gehäuse (3, 4, 5, 6) vorgesehener Formschlussbereich (33, 43, 53, 63) mit der Eindrückung (13) oder Ausbuchtung (13') des Gassackpaketes (10) in Eingriff gebracht wird.

26. Verfahren nach Anspruch 25, **dadurch gekennzeichnet, dass** in der Hülle (2) eine mit der Eindrückung (13) oder Ausbuchtung (13') des Gassackpaketes (10) korrespondierende Eindrückung (23) oder Ausbuchtung gebildet wird.

27. Verfahren nach Anspruch 26, **dadurch gekennzeichnet, dass** die Eindrückung (23) oder Ausbuchtung der Hülle (2) bei der Festlegung des Gassackpaketes (10) an einem Modulgehäuse (3, 4, 5, 6) gebildet wird.

28. Faltvorrichtung zur Ausführung des Verfahrens nach einem der vorhergehenden Ansprüche, mit
- Faltelementen (A1, A2, P1, P2) zur Faltung eines Gassackes (1), in dessen Innerem ein Einlageteil (14) angeordnet ist, zu einem Gassackpaket (2) und
- Mitteln (D, Z) zum Einbringen des Gassackpaketes (10) in eine das Gassackpaket (10) umschließende Hülle (2).

29. Faltvorrichtung nach Anspruch 28, **dadurch gekennzeichnet, dass** an der Faltvorrichtung Evakuierungsmittel (E) zur Erzeugung eines Unterdruckes in der das Gassackpaket (10) umschließenden Hülle (2) angeordnet sind.

30. Faltvorrichtung nach Anspruch 28 oder 29, **dadurch gekennzeichnet, dass** an der Faltvorrichtung Mittel (H) zum gasdichten Verschließen der Hülle (10) angeordnet sind.

31. Gassackpaket für ein Airbagmodul eines Kraftfahrzeugs, das von einer Hülle (2) gasdicht umschlossen ist,
**dadurch gekennzeichnet,**
**dass** die Hülle (2) durch mindestens zwei separate Hüllenelemente (21, 22) gebildet wird, die gemeinsam das Gassackpaket (10) gasdicht umschließen, wobei in dem Gassackpaket (10) ein Einlageteil (14) angeordnet ist, das in einen Hinterschnitt eines Modulgehäuses (3, 4, 5, 6) eingreifen kann.

32. Gassackpaket nach Anspruch 31, **dadurch gekennzeichnet, dass** das eine Hüllenelement (21) topfartig ausgebildet ist und das andere Hüllenelement (22) eine freie Deckfläche des topfartigen Hüllenelementes (21) verschließt.

33. Gassackpaket nach einem der Anspruch 31 oder 32, **dadurch gekennzeichnet, dass** in dem Gassackpaket (10) und in der Hülle (2) aneinander anliegende Bereiche mit jeweils einer Eindrückung (13, 23) oder einer Ausbuchtung (13') versehen sind, über die das Gassackpaket (10) zusammen mit der Hülle (2) formschlüssig an einem Modulgehäuse (3, 4, 5, 6) festlegbar ist.

34. Gassackpaket nach Anspruch 33, **dadurch gekennzeichnet, dass** die Eindrückung (13, 23) oder Ausbuchtung (13') durch das Einlageteil (14) gebildet ist.

35. Gassackpaket nach Anspruch 33 oder 34, **dadurch gekennzeichnet, dass** die Eindrückung (13, 23) oder Ausbuchtung (13') an das Einlageteil (14) grenzt.

## Claims

1. Process for producing an airbag packet for an airbag module, in which
a) the airbag (1) is folded up in a folding apparatus to form an airbag packet (10), and
b) the airbag packet (10) is enclosed in a gastight manner by a flexible envelope (2),
**characterized**
**in that** the airbag packet (10) is at least partially enclosed by the envelope (2) while it is still in the folding apparatus, at least one inlay part (14), by means of which the airbag packet (10) can engage in an undercut in a module housing (3, 4, 5, 6), being arranged in the airbag (1).

2. Process according to Claim 1, **characterized in that** the airbag packet (10) is enclosed at least on more than one side in a cup-like manner by the envelope (2) in the folding apparatus.

3. Process according to Claim 1 or 2, **characterized in that** the airbag packet (10) is completely enclosed by the envelope (2) while it is still in the folding apparatus.

4. Process according to one of the preceding claims, **characterized in that** the airbag packet (10) is at least partially enclosed by the envelope (2) in the folding apparatus while the airbag packet (10) is still bounded on at least one side by folding elements (P1, P2) which were used to fold the airbag packet (10).

5. Process according to Claim 4, **characterized in that** the airbag packet (10), while the envelope (2) is being formed in the folding apparatus, is still bounded by at least one active folding element (A1, A2) which is acting on the airbag (1) while the airbag packet (10) is being folded towards its centre.

6. Process according to Claim 4 or 5, **characterized in that** the airbag packet (10), while the envelope (2) is being formed, is still bounded by at least one passive folding element (P1, P2) which was used to bound the folding space during the folding of the airbag packet (10).

7. Process according to one of the preceding claims, **characterized in that** the envelope (2) is formed by at least two separate envelope elements (21, 22).

8. Process according to Claim 7, **characterized in that** one envelope element (21) is formed cup-like and the other envelope element (22) closes off the cup-like envelope element (21).

9. Process according to Claim 8, **characterized in that** the cup-like envelope element (21) is formed when the airbag packet (10) is being enclosed by the envelope (2).

10. Process according to Claim 8 or 9, **characterized in that** the cup-like envelope element (21) is formed by at least one shaping body (Z) which guides the envelope element (21) along the edge of the airbag packet (10).

11. Process according to Claim 10, **characterized in that** the shaping body (Z) is guided along the edge of the airbag packet (10) while at least one folding element (A1, A2) of the folding apparatus is being moved away from the edge of the airbag packet (10).

12. Process according to Claim 8, **characterized in that** the cup-like envelope element (21) is pre-shaped prior to the introduction of the airbag packet (10).

13. Process according to Claim 12, **characterized in that** the airbag packet (10) is pressed into the pre-shaped cup-like envelope element (21) by at least one ram of the folding apparatus.

14. Process according to Claim 12 or 13, **characterized in that** the pre-shaped cup-like envelope element (21) is fixed to the folding apparatus in such a manner that the folded airbag packet (10) can be pressed into the envelope element (21).

15. Process according to one of the preceding claims, **characterized in that** the envelope (2) used to enclose the airbag packet (10) is severed from an endless strip (201, 202).

16. Process according to Claim 15, **characterized in that** the envelope (2) is severed using separating means (H) provided at the folding apparatus.

17. Process according to Claim 16, **characterized in that** the separating means (H) used are heating elements.

18. Process according to one of the preceding claims, **characterized in that** a multilayer film is used to form the envelope (2).

19. Process according to one of the preceding claims, **characterized in that** a subatmospheric pressure is generated in the space (U) enclosed by the envelope (2) before the envelope (2) is closed in a gastight manner.

20. Process according to Claim 19, **characterized in that** the subatmospheric pressure is generated by evacuation means (E) provided at the folding apparatus.

21. Process according to Claim 19 or 20, **characterized in that** the envelope (2) is closed in a gastight manner after a subatmospheric pressure has been generated in the space (U) enclosed by the envelope (2).

22. Process according to Claims 7 and 21, **characterized in that** the envelope (2) is closed by joining the two envelope elements (21, 22).

23. Process according to Claim 22, **characterized in that** the two envelope elements (21, 22) are joined to one another by being fused together.

24. Process according to Claim 22 or 23, **characterized in that** the two envelope elements (21, 22) are joined together by joining means (H) provided on the folding apparatus.

25. Process according to one of the preceding claims, **characterized in that** when the airbag packet (10) is being formed, at least one depression (13) and/or projection (13') is produced in the airbag packet (10), by means of which the airbag packet (10) can be arranged in a positively locking manner at a module housing (3, 4, 5, 6) by a positively locking region (33, 43, 53, 63) provided on the housing (3, 4, 5, 6) being brought into engagement with the depression (13) or projection (13') of the airbag packet (10).

26. Process according to Claim 25, **characterized in that** a depression (23) or projection which corresponds to the depression (13) or projection (13') of the airbag packet (10) is formed in the envelope (2).

27. Process according to Claim 26, **characterized in that** the depression (23) or projection of the envelope (2) is formed when the airbag (10) is being fixed to a module housing (3, 4, 5, 6).

28. Folding apparatus for carrying out the process according to one of the preceding claims, having
- folding elements (A1, A2, P1, P2) for folding an airbag (1), in which an inlay part (14) is arranged, to form an airbag packet (2), and
- means (D, Z) for introducing the airbag packet (10) into an envelope (2) which encloses the airbag packet (10).

29. Folding apparatus according to Claim 28, **characterized in that** evacuation means (E) for generating a subatmospheric pressure in the envelope (2) enclosing the airbag packet (10) are arranged at the folding apparatus.

30. Folding apparatus according to Claim 28 or 29, **characterized in that** means (H) for closing the envelope (10) in a gastight manner are arranged at the folding apparatus.

31. Airbag packet for an airbag module of a motor vehicle, which is enclosed in a gastight manner by an envelope (2),
**characterized**
**in that** the envelope (2) is formed by at least two separate envelope elements (21, 22), which together enclose the airbag packet (10) in a gastight manner, an inlay part (14), which can engage in an undercut of a module housing (3, 4, 5, 6), being arranged in the airbag packet (10).

32. Airbag packet according to Claim 31, **characterized in that** one envelope element (21) is formed cup-like and the other envelope element (22) closes off a free covering surface of the cup-like envelope element (21).

33. Airbag packet according to either of Claims 31 and 32, **characterized in that** regions which adjoin one another in the airbag packet (10) and in the envelope (2) are each provided with a depression (13, 23) or a projection (13'), by means of which the airbag packet (10) together with the envelope (2) can be fixed in a positively locking manner to a module housing (3, 4, 5, 6).

34. Airbag packet according to Claim 33, **characterized in that** the depression (13, 23) or projection (13') is formed by the inlay part (14).

35. Airbag packet according to Claim 33 or 34, **characterized in that** the depression (13, 23) or projection (13') adjoins the inlay part (14).

## Revendications

1. Procédé de fabrication d'un paquet formant sac gonflable pour un module d'airbag, dans lequel
a) le sac gonflable (1) est replié dans un dispositif de pliage pour obtenir un paquet formant sac gonflable (10) et
b) le paquet formant sac gonflable (10) est entouré de manière étanche au gaz par une enveloppe flexible (2),
**caractérisé en ce que**
le paquet formant sac gonflable (10) est déjà entouré au moins en partie par l'enveloppe (2) dans le dispositif de pliage, au moins une partie d'insertion (14) étant disposée dans le sac gonflable (1), partie avec laquelle le paquet formant sac gonflable (10) peut s'engager dans une contre-dépouille dans un boîtier de module (3, 4, 5, 6).

2. Procédé selon la revendication 1, **caractérisé en ce que** le paquet formant sac gonflable (10) est entouré à la façon d'un pot par l'enveloppe (2) au moins sur plusieurs côtés dans le dispositif de pliage.

3. Procédé selon la revendication 1 ou 2, **caractérisé en ce que** le paquet formant sac gonflable (10) est entièrement entouré par l'enveloppe (2) dans le dispositif de pliage.

4. Procédé selon l'une quelconque des revendications précédentes, **caractérisé en ce que** le paquet formant sac gonflable (10) est entouré au moins en partie par l'enveloppe (2) dans le dispositif de pliage, tandis que le paquet formant sac gonflable (10) est délimité encore sur au moins un côté par des éléments de pliage (P1, P2), qui ont été utilisés pour plier le paquet formant sac gonflable (10).

5. Procédé selon la revendication 4, **caractérisé en ce que** le paquet formant sac gonflable (10), au cours de la formation de l'enveloppe (2), est encore délimité dans le dispositif de pliage par au moins un élément de pliage actif (A1, A2) qui, au cours du pliage du paquet formant sac gonflable (10) en direction de son centre, agit sur le sac gonflable (1).

6. Procédé selon la revendication 4 ou 5, **caractérisé en ce que** le paquet formant sac gonflable (10) est encore délimité pendant la formation de l'enveloppe (2) par au moins un élément de pliage passif (P1, P2) qui, au cours du pliage du paquet formant sac gonflable (10), a été utilisé pour délimiter l'espace de pliage.

7. Procédé selon l'une quelconque des revendications précédentes, **caractérisé en ce que** l'enveloppe (2) est formée par au moins deux éléments d'enveloppe (21, 22) séparés.

8. Procédé selon la revendication 7, **caractérisé en ce que** l'un des éléments d'enveloppe (21) est conçu en forme de pot et l'autre élément d'enveloppe (22) ferme l'élément d'enveloppe en forme de pot (21).

9. Procédé selon la revendication 8, **caractérisé en ce que** l'élément d'enveloppe en forme de pot (21) est formé lorsque le paquet formant sac gonflable (10) est entouré avec l'enveloppe (2).

10. Procédé selon la revendication 8 ou 9, **caractérisé en ce que** l'élément d'enveloppe en forme de pot (21) est formé par au moins un corps moulé (Z) qui guide l'élément d'enveloppe (21) le long du bord du paquet formant sac gonflable (10).

11. Procédé selon la revendication 10, **caractérisé en ce que** le corps moulé (Z) est guidé le long du bord du paquet formant sac gonflable (10), tandis qu'au moins un élément de pliage (A1, A2) du dispositif de pliage est déplacé à distance du bord du paquet formant sac gonflable (10).

12. Procédé selon la revendication 8, **caractérisé en ce que** l'élément d'enveloppe en forme de pot (21) est préformé avant l'introduction du paquet formant sac gonflable (10).

13. Procédé selon la revendication 12, **caractérisé en ce que** le paquet formant sac gonflable (10) est pressé par au moins un poinçon du dispositif de pliage dans l'élément d'enveloppe préformé et en forme de pot (21).

14. Procédé selon la revendication 12 ou 13, **caractérisé en ce que** l'élément d'enveloppe préformé en forme de pot (21) est fixé au dispositif de pliage de telle sorte que le paquet formant sac gonflable (10) plié peut être pressé à l'intérieur de l'élément d'enveloppe (21).

15. Procédé selon l'une quelconque des revendications précédentes, **caractérisé en ce que** l'enveloppe (2) utilisée pour entourer le paquet formant sac gonflable (10) est séparée d'une bande sans fin (201, 202).

16. Procédé selon la revendication 15, **caractérisé en ce que** l'enveloppe (2) est séparée en utilisant des moyens de séparation (H) prévus sur le dispositif de pliage.

17. Procédé selon la revendication 16, **caractérisé en ce que** des éléments chauffants sont utilisés comme moyens de séparation (H).

18. Procédé selon l'une quelconque des revendications précédentes, **caractérisé en ce qu'**une feuille multicouches est utilisée pour former l'enveloppe (2).

19. Procédé selon l'une quelconque des revendications précédentes, **caractérisé en ce qu'**une dépression est produite dans l'espace (U) entouré par l'enveloppe (2) avant la fermeture étanche au gaz de l'enveloppe (2).

20. Procédé selon la revendication 19 ou 20, **caractérisé en ce que** la dépression est produite par des moyens de mise sous vide (E) prévus sur le dispositif de pliage.

21. Procédé selon la revendication 19 ou 20, **caractérisé en ce que** l'enveloppe (2) est fermée de manière étanche au gaz après la production d'une dépression dans l'espace (U) entouré par l'enveloppe (2).

22. Procédé selon les revendications 7 et 21, **caractérisé en ce que** l'enveloppe (2) est fermée en reliant les deux éléments d'enveloppe (21, 22).

23. Procédé selon la revendication 22, **caractérisé en ce que** les deux éléments d'enveloppe (21, 22) sont reliés l'un à l'autre par fusion.

24. Procédé selon la revendication 22 ou 23, **caractérisé en ce que** les deux éléments d'enveloppe (21, 22) sont reliés l'un à l'autre par des moyens de liaison (H) prévus sur le dispositif de pliage.

25. Procédé selon l'une quelconque des revendications précédentes, **caractérisé en ce que**, lors de la formation du paquet formant sac gonflable (10), au moins une empreinte (13) et/ou un renflement (13') est produit dans le paquet formant sac gonflable (10), au moyen desquels le paquet formant sac gonflable (10) peut être disposé par coopération de formes sur un boîtier de module (3, 4, 5, 6), dans lequel une zone de coopération de formes (33, 43, 53, 63) prévue sur le boîtier (3, 4, 5, 6) est amenée en engagement avec l'empreinte (13) ou le renflement (13') du paquet formant sac gonflable (10).

26. Procédé selon la revendication 25, **caractérisé en ce qu'**une empreinte (23) ou un renflement correspondant avec l'empreinte (13) ou le renflement (13') du paquet formant sac gonflable (10) est formé(e) dans l'enveloppe (2).

27. Procédé selon la revendication 26, **caractérisé en ce que** l'empreinte (23) ou le renflement de l'enveloppe (2) est formé(e) lors de la fixation du paquet formant sac gonflable (10) sur un boîtier de module (3, 4, 5, 6).

28. Dispositif de pliage destiné à réaliser le procédé selon l'une quelconque des revendications précédentes, comprenant
- des éléments de pliage (A1, A2, P1, P2) destinés à plier un sac gonflable (1), à l'intérieur duquel est disposée une partie d'insertion (14), pour obtenir un paquet formant sac gonflable (2) et
- des moyens (D, Z) destinés à introduire le paquet formant sac gonflable (10) dans une enveloppe (2) entourant le paquet formant sac gonflable (10).

29. Dispositif de pliage selon la revendication 28, **caractérisé en ce que** des moyens de mise sous vide (E) destinés à produire une dépression dans l'enveloppe (2) entourant le paquet formant sac gonflable (10) sont disposés sur le dispositif de pliage.

30. Dispositif de pliage selon la revendication 28 ou 29, **caractérisé en ce que** des moyens (H) destinés à fermer l'enveloppe (10) de manière étanche au gaz sont disposés sur le dispositif de pliage.

31. Paquet formant sac gonflable pour un module d'airbag d'un véhicule automobile, qui est entouré de manière étanche au gaz par une enveloppe (2),
**caractérisé en ce que**
l'enveloppe (2) est formée par au moins deux éléments d'enveloppe (21, 22) séparés, qui entourent conjointement le paquet formant sac gonflable (10) de manière étanche au gaz, une partie d'insertion (14) étant disposée dans le paquet formant sac gonflable (10), partie qui peut s'engager dans une contre-dépouille d'un boîtier de module (3, 4, 5, 6).

32. Paquet formant sac gonflable selon la revendication 31, **caractérisé en ce que** l'un des éléments d'enveloppe (21) est conçu en forme de pot et l'autre élément d'enveloppe (22) ferme une surface de recouvrement libre de l'élément d'enveloppe en forme de pot (21).

33. Paquet formant sac gonflable selon la revendication 31 ou 32, **caractérisé en ce que** des zones adjacentes dans le paquet formant sac gonflable (10) et dans l'enveloppe (2) sont pourvues respectivement d'une empreinte (13, 23) ou d'un renflement (13'), par l'intermédiaire desquels le paquet formant sac gonflable (10) peut être fixé conjointement avec l'enveloppe (2) par coopération de formes sur un boîtier de module (3, 4, 5, 6).

34. Paquet formant sac gonflable selon la revendication 33, **caractérisé en ce que** l'empreinte (13, 23) ou le renflement (13') est formé(e) par la partie d'insertion (14).

35. Paquet formant sac gonflable selon la revendication 33 ou 34, **caractérisé en ce que** l'empreinte (13, 23) ou le renflement (13') est adjacent(e) à la partie d'insertion (14).
